Europäisches Patentamt

European Patent Office

Office européen des brevets

(11) Publication number: **0 021 792**

**A1**

(12) **EUROPEAN PATENT APPLICATION**

(21) Application number: 80302062.7

(22) Date of filing: 18.06.80

(51) Int. Cl.³: **A 01 D 35/262**

(30) Priority: 22.06.79 GB 7921884

(43) Date of publication of application:
07.01.81 Bulletin 81/1

(84) Designated Contracting States:
BE DE FR LU NL

(71) Applicant: QUALCAST (LAWN MOWERS) LIMITED
Coleridge Street
Sunnyhill Derby DE3 7JT(GB)

(72) Inventor: Dawson, Frank
"Netherhey", 33 Moorway Lane
Littleover Derby DE3 7FR(GB)

(72) Inventor: Lambert, Charles David
21 Walton Drive
Sunnyhill Derby DE3 7GN(GB)

(74) Representative: Sanders, Peter Colin
Christopher et al,
BROOKES & MARTIN High Holborn House 52/54 High
Holborn
London WC1V 6SE(GB)

(54) Rotary lawnmowers.

(57) A rotary scythe lawn mower has an extended cutter shaft
(20) offset from an electric motor drive shaft (24), the extended
cutter shaft being driven from the top of the motor (8) and
being supported in axially spaced bearings (19a,19b).

EP 0 021 792 A1

./...

Croydon Printing Company Ltd.

*Fig.1.*

- 1 -

This invention relates to rotary lawnmowers.

Rotary lawnmowers normally have a single cutter which rotates about a vertical axis and cuts the grass with a scythe action. The cutter is mounted on a shaft driven by an electric motor or by an internal combustion engine. This shaft must be mounted in such a manner that it is capable of withstanding the enormous torsional and bending loads to which it is subjected if the rotating cutter is brought to a dead stop by inadvertently striking a rigid object in the ground. Therefore, when this shaft is the output drive shaft of an electric motor mounted on the deck of the mower, the shaft is normally extended upwardly through the centre of the motor so that it can be made sufficiently long to accommodate axially spaced bearings which are far enough apart to withstand these loads.

With such an arrangement, however, the cutter is necessarily rotated at the same speed as that of the motor and this is not always desirable. For example, in an airborne mower which includes an impeller mounted above the cutter on a common shaft (the impeller producing the cushion of air on which the mower rides), the impeller as well as the cutter must rotate at the speed of the motor. Because of this, the motor is normally run at a speed below that
at which it runs at maximum efficiency, while the impeller
is rotated at a speed higher than that which produces
maximum lift.

One way of overcoming the latter problem is to provide
a reduction gear between the motor shaft and the driven shaft.
Such an approach has previously been suggested, for example,
in British Patent 1,089,687.  This allows the use of a high
speed motor which can be run at maximum efficiency, while the
impeller/cutter speed can be set independently by selecting
the appropriate reduction gear.

However, the arrangement shown in British Patent 1,089,687
does not meet the prime requirement of providing a long cutter
shaft rotatable in a pair of axially spaced bearings.

The present invention is based on the realisation that
this requirement can be met without extending the cutter shaft
upwardly through the centre of the motor, if the motor is
inverted and the drive to the layshaft is taken from the top
of the motor instead of from the bottom.

The layshaft can then be supported in widely spaced
bearings to provide a stable construction with reduced
vibration and without resorting to the use of heavy duty
bearings. Moreover, access to the power transmission system
from the motor to the layshaft is simplified, and this preferably
comprises a belt drive between a drive gear on the output shaft
of the motor and a driven gear on the layshaft.

A major advantage over the conventional system in which the cutter shaft extends upwardly through the motor, is that the layshaft can be completely insulated from the motor. This provides much greater electrical safety.

By way of example only, an embodiment of the invention will now be described with reference to the accompanying drawings in which:-

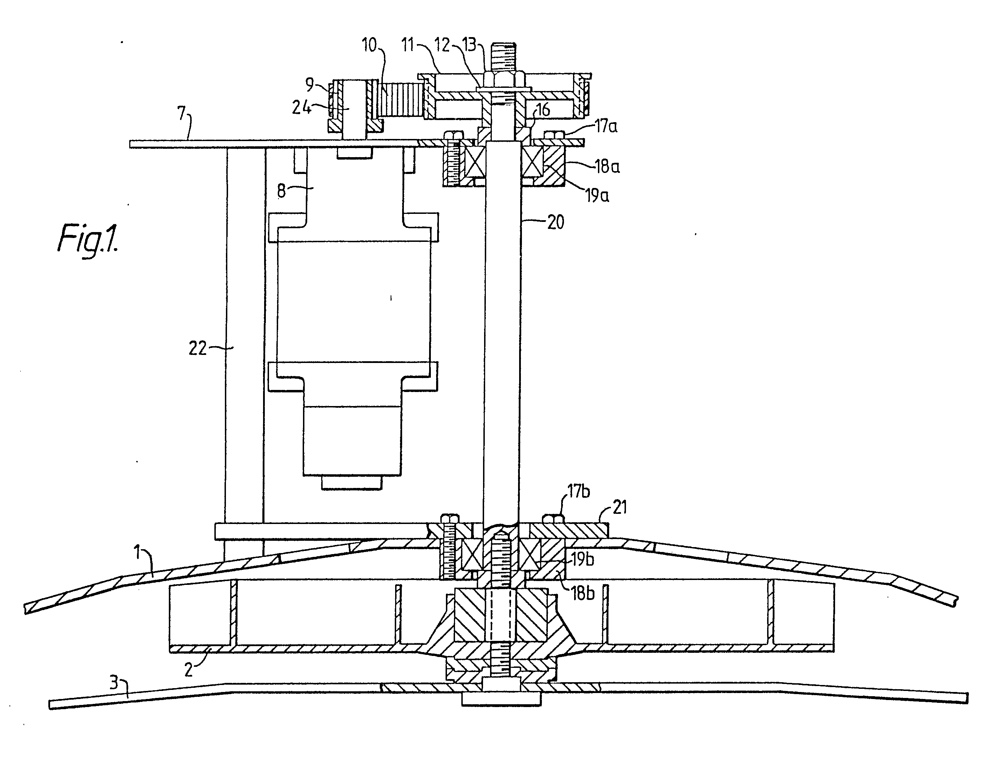

FIG. 1 is an elevational view, partly sectioned, of the drive for a rotary scythe hovermower embodying the present invention, and

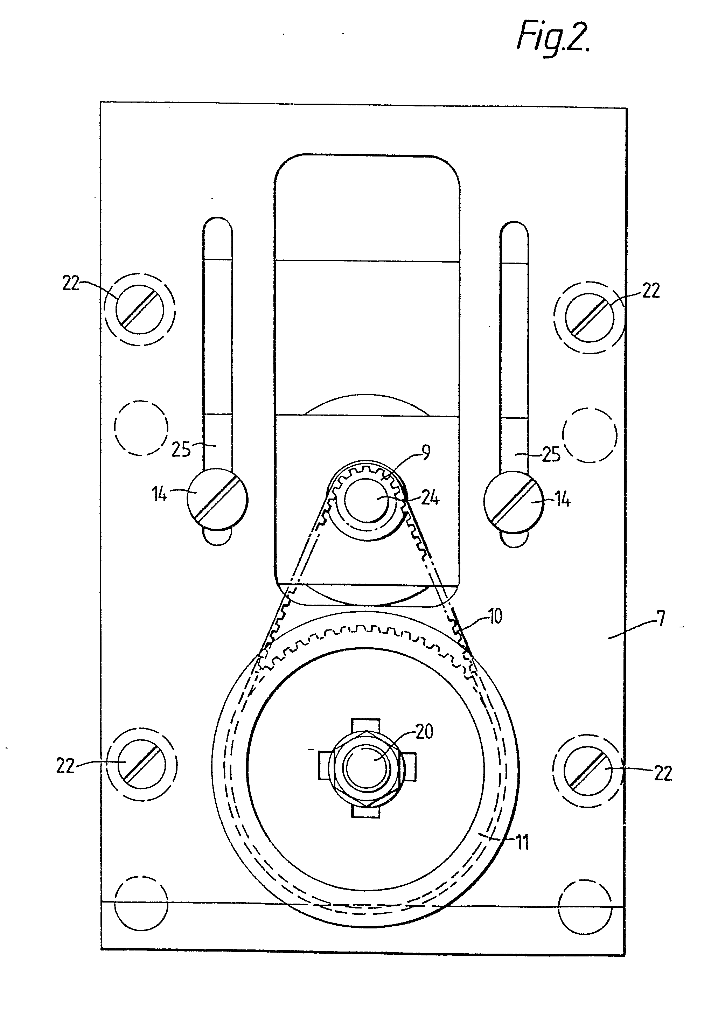

FIG. 2 is a plan view of the drive shown in Fig. 1.

Referring to these figures, a rotary scythe cutting blade 3 and an impeller 2 are mounted on a common layshaft 20 for rotation about a vertical axis beneath a lawn mower deck 1. In use, the impeller draws air through the centre opening in the deck and thus produces a cushion of air on which the mower rides while mowing, as is well known in the art.

A driven gear 11 is fitted to the top end of the layshaft 20. A toothed belt 10 passes around the gear 11 and around a drive gear 9 carried on the output shaft 24 of an electric motor 8. The motor housing is secured through slots 25 to a top frame plate 7 by set screws and nuts 14 so that its position relative to the layshaft 20 can be adjusted to vary the tension in the toothed belt.

- 4 -

The top frame plate 7 is screwed to four upright pillars 22, the pillars in turn being secured to a bottom frame plate 21.

The layshaft 20 rotates in axially spaced upper and lower bearings 19a, 19b, carried in bearing housings 18a, 18b, respectively, the upper bearing housing 18a being screwed to an extension of the top frame plate 7 by set screws 17a, and the lower bearing housing 18b being screwed to an extension of the lower frame plate 21 by set screws 17b.

The driven gear 11 is spaced from the plate 7 by a spacer 16, and secured on the layshaft 20 by a washer 12 and locknut 13.

C L A I M S

1.  A rotary lawn mower comprising an electric motor mounted above a deck for rotation about a first substantially vertical axis, a rotary cutter mounted on a shaft for rotation beneath the deck about a second substantially vertical axis offset from the first axis, a reduction power drive interconnecting the cutter shaft and an output shaft of the motor, and a pair of axially spaced bearings rotatably supporting the cutter shaft, at least one of the bearings being located above the deck.

2.  A lawn mower according to Claim 1 in which the said motor output shaft extends upwardly from the top of the motor.

3.  A lawn mower according to Claim 2 in which a first of the bearings is located substantially at deck level, and the second bearing supports the upper end of the cutter shaft.

4.  A lawn mower according to Claim 3 in which the power drive includes a drive gear on the output shaft of the motor and a driven gear at the upper end of the cutter shaft.

5.  A lawn mower according to Claim 4 in which the two gears are interconnected by a belt drive.

0021792

- 6 -

6.  A lawn mower according to any one of the
preceding claims further comprising a frame supporting
the motor above the deck, the motor being secured
beneath a generally horizontal upper frame member, and
the upper of the two bearings being carried in a
housing secured to an extension of the upper frame member.

7.  A lawn mower according to Claim 1 further
comprising means for adjusting the said offset between
the two vertical axes.

Fig.1.

0021792

*Fig.2.*

0021792

European Patent Office

**EUROPEAN SEARCH REPORT**

Application number
EP 80 30 2062

## DOCUMENTS CONSIDERED TO BE RELEVANT

| Category | Citation of document with indication, where appropriate, of relevant passages | Relevant to claim |
|---|---|---|
| X | US - A - 4 084 395 (NANNEN) <br> * Column 3, line 59 to column 4, line 51; figure 2 * | 1-5 |
| X | DE - A - 2 034 844 (FUHLER) <br> * Page 5, lines 17-20; figure 2 * | 1,2,4, 5,6 |
| X | DE - A - 2 314 745 (HASELOFF) <br> * Page 2, line 23 to page 3, line 7 * | 1,2,4, 5,6 |
| | FR - A - 2 039 175 (RASILICO) <br> * Page 2, lines 14-21; figure 1 * | 1,4,5 |
| D | DE - A - 1 507 226 (FLYMO) <br> * Page 3, lines 5-15 * <br> & GB - A - 1 089 687 | 1,4,5 |
| | CH - A - 492 386 (STALDER) <br> * Column 2, line 29 to column 3, line 8; figure 2 * | 1,4,5, 6 |
| | FR - A - 2 298 927 (SOCIETE COM- MERCIALE MODERNE) <br> * Page 4, lines 1-17 * | 1,4,5 |
| | GB - A - 725 898 (TORO) <br> * Page 2, lines 67-106 * | 1,4,5 |
| A | US - A - 2 777 270 (COLCLAZIER) <br> * Column 2, lines 3-18 * | 1,4,5 |

**CLASSIFICATION OF THE APPLICATION (Int. Cl. ³)**

A 01 D 35/262

**TECHNICAL FIELDS SEARCHED (Int.Cl. ³)**

A 01 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| THE HAGUE | 17-07-1980 | DE LAMEILLIEURE |

EPO Form 1503.1  06.78